# EUROPÄISCHE PATENTSCHRIFT

(11) **EP 0 414 316 B1**
(45) Veröffentlichungstag und Bekanntmachung des Hinweises auf die Patenterteilung: **24.05.1995**
(21) Anmeldenummer: 90202232.6
(22) Anmeldetag: 20.08.1990
(51) Int. Cl.: G06K 19/077, H01L 23/60, G06K 19/07

(54) **Integrierte Schaltung**
Integrated circuit
Circuit intégré

(30) Priorität: 24.08.1989 DE 3927887
(43) Veröffentlichungstag der Anmeldung: 27.02.1991
(73) Patentinhaber: Philips Patentverwaltung GmbH, 22335 Hamburg (DE); Philips Electronics N.V., 5621 BA Eindhoven (NL)
(72) Erfinder: Timm, Volker, Dr., D-2080 Pinneberg (DE)
(74) Vertreter: Poddig, Dieter, Dipl.-Ing.

(56) Entgegenhaltungen:
- EP-A- 0 080 233
- EP-A- 0 347 321
- PATENT ABSTRACTS OF JAPAN, Band 10, Nr. 16 (E-375)(2073), 22. Januar 1986 & JP-A-60178646
- PATENT ABSTRACTS OF JAPAN, Band 10, Nr. 297 (E-444)(2353), 9. Oktober 1986 & JP-A-61114564

## Beschreibung

Die Erfindung betrifft einen Datenträger, insbesondere tragbaren Datenträger wie Scheckkarte, mit wenigstens einer integrierten Schaltung und eine integrierte Schaltung für einen solchen Datenträger aus einem Halbleiterplättchen mit darin integrierten Bauelementen, die über Leiterbahnen miteinander verbunden sind, von denen wenigstens ein Teil mit einer auf dem Halbleiterplättchen angebrachten isolierenden Schicht und diese mit einer darauf angebrachten elektrisch leitenden Schicht bedeckt sind, die mit der integrierten Schaltung verbunden ist. Ein solcher Datenträger ist aus der EP-A- 0169941 bekannt.

Derartige Datenträger mit einer oder mehreren integrierten Schaltungen sind häufig aus mehreren Kunststoffschichten aufgebaut, wobei die integrierte Schaltung in einer Höhlung einer mittleren Kunststoffschicht angeordnet ist und somit von außerhalb nicht unmittelbar zugänglich ist, sondern lediglich über gesondert angeordnete elektrische Kontaktstellen oder durch induktive oder kapazitive Mittel. Diese Datenträger dienen häufig als Legitimation des Besitzers des Datenträgers, beispielsweise für die Berechtigung des Zugangs zu bestimmten räumlichen Bereichen oder für die Durchführung einer Bank-Transaktion. Dafür gibt der Besitzer des Datenträgers diesen in eine entsprechende Aufnahmeanordnung und gibt außerdem noch bestimmte, nur ihm bekannte bzw. zugehörige Daten ein, die dann auf der Karte mit darin gespeicherten Daten verglichen werden. Dabei ist es wichtig, daß diese in dem Datenträger bzw. in der darin enthaltenen integrierten Schaltung gespeicherten Daten nicht nach außerhalb verfügbar werden, damit ein Dieb oder ein unehrlicher Finder eines derartigen Datenträgers diesen nicht mißbräuchlich benutzen kann.

Ein Datenträger der eingangs genannten Art ist aus den Patent Abstracts of Japan Band 10, Nr. 16 (D-375) (2073) v. 22. Jan. 1986. und JP-A-60-178646 bekannt. Die elektrisch leitende Schicht soll verhindern, daß die integrierte Schaltung durch elektrische Aufladung beschädigt oder in ihrer Funktion verändert wird. Gleichzeitig verhindert die Schicht auch, daß Signale innerhalb der Schaltung z.B. mit Elektronenstrahlen analysiert werden können, was jedoch in diesen Druckschriften nicht erwähnt ist. Allerdings ist es für einen Betrüger möglich, die integrierte Schaltung innerhalb des Datenträgers mechanisch freizulegen, die Schicht mit einem begrenzten technischen Aufwand zu entfernen und die Schaltung in üblicher Weise in Betrieb zu setzen, d.h. insbesondere mit Betriebsspannung zu versorgen, so daß danach doch eine Untersuchung der Signale innerhalb der integrierten Schaltung möglich ist.

Die aus der eingangs erwähnten EP-A- 0169941 bekannte integrierte Halbleiterschaltung ist ebenfalls oberhalb der aktiven Strukturen mit wenigstens einer elektrisch leitenden Schutzschicht bedeckt. Diese ist an zwei Stellen mit Teilen einer Sicherheitslogik der integrierten Schaltung verbunden, und die Schicht stellt eine elektrische Verbindung dar, die für die Funktion der Sicherheitslogik und damit der gesamten integrierten Schaltung notwendig ist. Wenn also ein Betrüger die elektrisch leitende Schicht entfernt, um die darunterliegenden Leiterbahnen abzutasten, ist ein ordnungsgemäBer Betrieb der Schaltung nicht möglich, so daß in der Schaltung enthaltene Information nicht unberechtigt erkannt werden kann. Da die beiden Stellen, an denen die Schicht mit der darunter angeordneten integrierten Schaltung verbunden ist, jedoch leicht erkennbar sind, ist es für einen Betrüger mit erhöhtem technischen Aufwand möglich, die Schicht nur teilweise so zu entfernen, daß eine leitende Verbindung zwischen den Verbindungsstellen mit der integrierten Schaltung übrig bleibt und dennoch der größte Teil der integrierten Schaltung frei liegt, so daß diese doch in der ordnungsgemäßen Funktion untersucht werden kann.

Aufgabe der Erfindung ist es daher, einen Datenträger der eingangs genannten Art anzugeben, bei dem die elektrischen Signale innerhalb der integrierten Schaltung praktisch nicht mehr oder nur mit einem derart hohen Aufwand untersucht werden können, daß es für einen möglichen Betrüger nicht möglich oder nicht lohnend ist, einen derartigen Datenträger mißbräuchlich zu benutzen.

Diese Aufgabe wird erfindungsgemäß dadurch gelöst, daß die elektrisch leitende Schicht über eine Vielzahl von Verbindungspunkten durch die isolierende Schicht mit Bauelementen der integrierten Schaltung verbunden ist und eine für die Funktion der integrierten Schaltung notwendige Spannungsversorgung darstellt.

Es ist nämlich praktisch unmöglich, die elektrisch leitende Schicht so partiell zu entfernen, daß die wesentlichen Teile der integrierten Schaltung freigelegt werden und trotzdem die eltrische Verbindung zu allen Verbindungspunkten zu erhalten, so daß es praktisch unmöglich ist, eine ausreichend freigelegte integrierte Schaltung ordnungsgemäß zu betreiben und die darin enthaltenen geheimen Daten ermitteln.

Ein besonderer Vorteil der erfindungsgemäßen Maßnahme, die zum Schutz von geheimen Daten in der integrierten Schaltung dienende Schicht gleichzeitig zur Spannungsversorgung zu verwenden, liegt darin, daß dadurch die Führung der übrigen Leiterbahnen in der integrierten Schaltung vereinfacht werden kann, weil in deren Ebene eine durchgehende Leiterbahn für die genannte Spannungsversorgung nicht mehr notwendig ist.

Eine weitere Erhöhung der Sicherheit gegen unbefugtes Auslesen geheimer Daten aus der integrierten Schaltung wird nach einer Ausgestaltung der Erfindung dadurch erreicht, daß in der Ebene der elektrisch leitenden Schicht wenigstens eine Leiterbahn liegt, die zusätzlich eine für die Funktion der integrierten Schaltung notwendige elektrische Verbindung darstellt. Dadurch wird die Schwierigkeit für einen Betrüger noch weiter erhöht, nur wesentliche Teile der Schicht so zu entfernen, daß die Schaltung noch funktionsfähig bleibt.

Ausführungsbeispiele der Erfindung werden nachstand anhand der Zeichnung erläutert. Darin zeigen
- Fig. 1: einen Datenträger mit einer integrierten Schaltung darin,
- Fig. 2: diese integrierte Schaltung mehr im Detail.

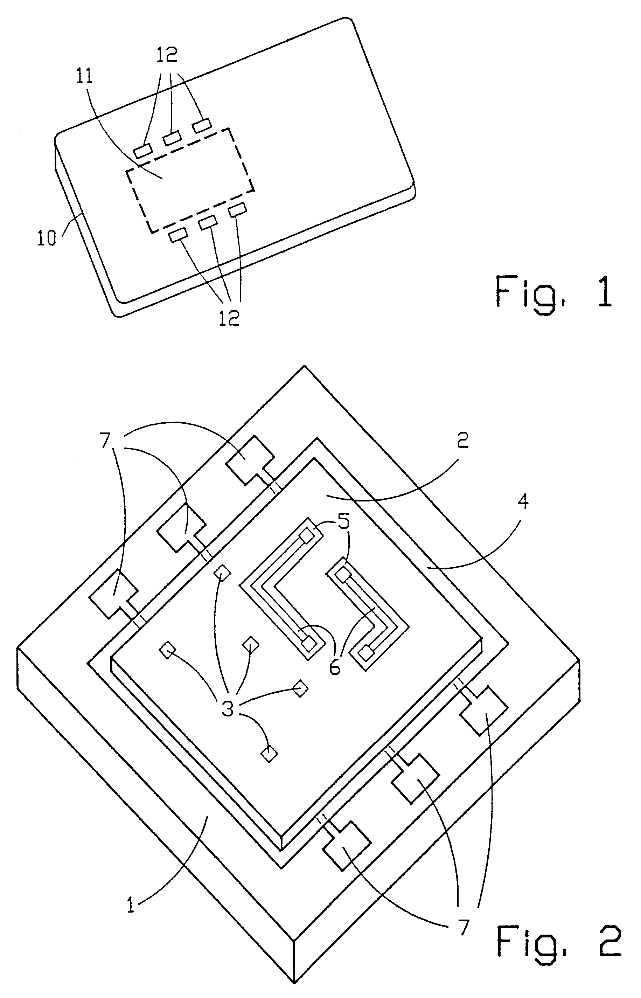

Der in Fig. 1 gezeigte Datenträger hat die Form eines flachen Rechtecks 10 und ist üblicherweise aus mehreren Schichten von Plastikmaterial aufgebaut. In einer Schicht zwischen den beiden Deckschichten ist eine integrierte Schaltung 11 angeordnet, und auf der Deckschicht des Datenträgers 10 befinden sich mehrere elektrische Kontakte 12, die mit Anschlüssen der integrierten Schaltung 11 verbunden sind und über die der integrierten Schaltung 11 die Betriebsspannung und Daten zugeführt werden bzw. über die Daten abgenommen werden. Statt der galvanischen Kontakte 12 können allerdings auch kontaktlose Übertragungsverfahren wie induktive oder kapazitive oder optische Übertragung von Energie und Daten verwendet werden.

Bei Benutzung eines tragbaren Datenträgers der in Fig. 1 dargestellten Art wird dieser in einen entsprechend ausgerüsteten, nicht dargestellten Leser eingeführt, der elektrische Verbindungen mit den Kontakten 12 herstellt und die Energieversorgung und den Datenaustausch mit der integrierten Schaltung 11 durchführt. Bevor eine Transaktion mit Hilfe eines solchen Datenträgers durchgeführt wird, erfolgt zunächst eine Verifikation des Benutzers des Datenträgers 10, indem dieser über eine Tastatur im Leser eine persönliche Geheimzahl eingibt, die der integrierten Schaltung 11 zugeführt wird und dort mit einer darin gespeicherten Geheimzahl verglichen wird.

Wenn ein solcher Datenträger verloren geht, kann ein betrügerischer Finder diesen Datenträger nur dann mißbräuchlich benutzen, wenn er die einzugebende Geheimzahl in Erfahrung bringt. Um dies zu verhindern, wird die in der integrierten Schaltung 11 gespeicherte Geheimzahl bei der Prüfung nicht nach außen abgegeben, sondern intern mit der zugeführten Geheimzahl verglichen. Es ist jedoch grundsätzlich möglich, den Datenträger 10 so zu öffnen, daß die integrierte Schaltung 11 frei liegt und dann nach Zuführung der Energieversorgung über die Kontakte 12 die Signale an einzelnen Schaltungspunkten innerhalb der integrierten Schaltung meßbar sind, beispielsweise durch Abtastung mittels feiner Sonden oder durch Abtastung mittels eines Elektronenstrahls. Darüber könnte dann die gespeicherte Geheimzahl ermittelt werden.

Um dies zu verhindern, ist die integrierte Schaltung 11 in besonderer Weise ausgebildet, wie in Fig. 2 dargestellt ist. Die integrierte Schaltung besteht aus einem Halbleiterplättchen 1, das auf übliche Weise, d.h. durch Diffusionsprozesse, in der obersten Schicht mit Bauelementen wie Transistoren, Dioden, Widerstände usw. versehen. Dabei ist ein Randbereich des Halbleiterplättchens 1 von Bauelementen freigehalten, um Anschlußflächen 7 für die elektrische Verbindung der integrierten Schaltung in dem Halbleiterplättchen nach außen zu den Kontakten 12 in Fig. 1 anzubringen. Die Bauelemente der integrierten Schaltung sind untereinander durch Leiterbahnen miteinander verbunden, von denen wenigstens ein Teil aus metallischen Leiterbahnen bestehen, die auf einer die Bauelemente bedeckenden Isolierschicht angebracht sind. Gegebenenfalls können auch mehrere Schichten von Leiterbahnen, die durch Isolierschichten voneinander getrennt sind, verwendet werden.

Die oberste Schicht von Leiterbahnen ist nun durch eine Isolierschicht 4 abgedeckt, die praktisch über alle Leiterbahnen hinausragt und im wesentlichen nur die Randbereiche des Halbleiterplättchens mit den Anschlußflächen 7 frei läßt. Auf dieser obersten Isolierschicht 4 ist nun eine Metallschicht 2 angebracht, und zwar mit grundsätzlich den gleichen bekannten Maßnahmen wie die darunter liegenden Schichten von metallischen Leiterbahnen, wobei diese Metallschicht 2 nicht über die Isolierschicht 4 hinausragt, um keine darunter liegenden Leiterbahnen insbesondere zu den Anschlußflächen 7 kurzzuschließen. Da die Metallschicht 2 alle Bauelemente und nahezu alle Leiterbahnen der integrierten Schaltung abdeckt, sind letztere in der Zeichnung nicht näher dargestellt.

Die Metallschicht 2 ist an Stellen 3, in denen sich Öffnungen in der Isolierschicht 4 befinden, mit darunter liegenden Leiterbahnen oder Bauelementen verbunden, d.h. die Metallschicht 2 stellt selbst eine Leiterbahn dar, die zur Versorgung der einzelnen Teile der darunter liegenden integrierten Schaltung mit einer Versorgungsspannung bzw. mit Massepotential dient.

In der Metallschicht 2 sind in dem hier dargestellten Beispiel Bereiche 5 ausgespart, in denen Leiterbahnen 6 auf der Isolierschicht 4 angeordnet sind, die von der Metallschicht 2 elektrisch isoliert sind und weitere Teile der integrierten Schaltung elektrisch miteinander verbinden. Dies ist jedoch nicht in allen Anwendungsfällen erforderlich, denn wenn die Metallschicht 2 entfernt wird, um die Signale auf darunter liegenden Leiterbahnen zu untersuchen, ist die integrierte Schaltung in jedem Falle nicht mehr funktionsfähig. Damit ist eine mißbräuchliche Untersuchung der integrierten Schaltung bzw. der darin auftretenden Signale nicht möglich.

Daher ist ein Datenträger mit einer derartigen integrierten Schaltung besonders gut geeignet für Anwendungsfälle, bei denen es auf große Sicherheit gegen betrügerische Manipulationen ankommt.

## Patentansprüche

1. Datenträger, insbesondere tragbarer Datenträger wie Scheckkarte, mit wenigstens einer integrierten Schaltung aus einem Halbleiterplättchen mit darin integrierten Bauelementen, die über Leiterbahnen miteinander verbunden sind, von denen wenigstens ein Teil mit einer auf dem Halbleiterplättchen angebrachten isolierenden Schicht und diese mit einer darauf angebrachten elektrisch leitenden Schicht bedeckt sind, die mit der integrierten Schaltung verbunden ist,
dadurch gekennzeichnet, daß die elektrisch leitende Schicht (2) über eine Vielzahl von Verbindungspunkten (3) durch die isolierende Schicht (4) mit Bauelementen der integrierten Schaltung verbunden ist und eine für die Funktion der integrierten Schaltung notwendige Spannungsversorgung darstellt.

2. Datenträger nach Anspruch 1,
dadurch gekennzeichnet, daß in der Ebene der elektrisch leitenden Schicht (2) wenigstens eine Leiterbahn (6) liegt, die zusätzlich eine für die Funktion der integrierten Schaltung notwendige elektrische Verbindung darstellt.

3. Integrierte Schaltung für einen Datenträger nach Anspruch 1 oder 2, bestehend aus einem Halbleiterplättchen mit darin integrierten Bauelernenten, die über Leiterbahnen miteinander verbunden sind, von denen wenigstens ein Teil mit einer auf dem Haloleiterplättchen angebrachten isolierenden Schicht und diese mit einer darauf angebrachten elektrisch leitenden Schicht bedeckt sind, die mit der integrierten Schaltung verbunden ist,
dadurch gekennzeichnet, daß die elektrisch leitende Schicht (2) über eine Vielzahl von Verbindungspunkten (3) durch die isalierende Schicht (4) mit Bauelementen der integrierten Schaltung verbunden ist und eine für die Funktion der integrierten Schaltung notwendige Spannungsversorgung darstellt.

## Claims

1. A data carrier, notably a portable data carrier such as a cheque card, comprising at least one integrated circuit consisting of a semiconductor wafer in which there are integrated components which are interconnected *via* conductor tracks, at least some of which are covered by an insulating layer which is provided on the semiconductor wafer and which itself is covered by an electrically conductive layer which is connected to the integrated circuit, characterized in that the electrically conductive layer (2) is connected to components of the integrated circuit, *via* a plurality of connection points (3) and through the insulating layer (4) and constitutes a voltage supply necessary for operation of the integrated circuit.

2. A data carrier as claimed in Claim 1, characterized in that in the plane of the electrically conductive layer (2) there is provided at least one conductor track (6) which additionally constitutes an electrical connection necessary for operation of the integrated circuit.

3. An integrated circuit for a data carrier as claimed in Claim 1 or 2, consisting of a semiconductor wafer in which there are integrated components which are interconnected *via* conductor tracks, at least some of which are covered by an insulating layer which is provided on the semiconductor wafer and which itself is covered by an electrically conductive layer which is connected to the integrated circuit,
characterized in that the electrically conductive layer (2) is connected, to components of the integrated circuit *via* a plurality of connection points (3) and through the insulating layer (4) and constitutes a voltage supply necessary for operation of the integrated circuit.

## Revendications

1. Support de données, en particulier support de données portable tel qu'une carte de banque, comportant au moins un circuit intégré constitué d'une plaquette semiconductrice dans laquelle sont intégrés des composants, qui sont interconnectés via des pistes conductrices, dont au moins une partie est recouverte d'une couche isolante appliquée sur la plaquette semi-conductrice, cette couche étant revêtue elle-même d'une couche conductrice de l'électricité appliquée sur sa surface, cette dernière couche étant connectée au circuit intégré, caractérisé en ce que la couche conductrice de l'électricité (2) est connectée, via une pluralité de points de connexion (3) à travers la couche isolante (4), à des composants du circuit intégré et représente une alimentation de tension indispensable au fonctionnement du circuit intégré.

2. Support de données selon la revendication 1, caractérisé en ce que, dans le plan de la couche conductrice de l'électricité (2), se trouve au moins une piste conductrice (6) qui représente, en outre, une connexion électrique indispensable au fonctionnement du circuit intégré.

3. Circuit intégré pour un support de données selon la revendication 1 ou 2, constitué d'une plaquette semi-conductrice avec des composants qui y sont intégrés et qui sont interconnectés par des pistes conductrices, dont au moins une partie est recouverte d'une couche isolante appliquée sur la plaquette semi-conductrice et celle-ci, d'une couche conductrice de l'électricité appliquée par-dessus, qui est connectée au circuit intégré, caractérisé en ce que la couche conductrice de l'électricité (2) est connectée via une pluralité de points de connexion (3) à travers la couche isolante (4) à des composants du circuit intégré et représente une tension d'alimentation indispensable au fonctionnement du circuit intégré.
